Europäisches Patentamt

European Patent Office

Office européen des brevets

(11) Veröffentlichungsnummer: **0 429 032 A1**

# (12) EUROPÄISCHE PATENTANMELDUNG

(21) Anmeldenummer: 90122054.1

(22) Anmeldetag: 18.11.90

(51) Int. Cl.5: **B64F 1/315**

(30) Priorität: 25.11.89 DE 3939075
18.11.89 DE 3938432

(43) Veröffentlichungstag der Anmeldung:
**29.05.91 Patentblatt 91/22**

(84) Benannte Vertragsstaaten:
**AT BE CH DE ES FR GB LI NL SE**

(71) Anmelder: **Wenzel, Lothar H., Dipl.-Ing.**
**Bornstrasse 7**
**W-5239 Luckenbach(DE)**

(72) Erfinder: **Wenzel, Lothar H., Dipl.-Ing.**
**Bornstrasse 7**
**W-5239 Luckenbach(DE)**

(74) Vertreter: **Weber, Dieter, Dr. et al**
**Dr. Dieter Weber und Dipl.-Phys. Klaus**
**Seiffert Patentanwälte**
**Gustav-Freytag-Strasse 25 Postfach 6145**
**W-6200 Wiesbaden 1(DE)**

(54) **Fluggasttreppe.**

(57) Die vorliegende Erfindung betrifft eine Fluggasttreppe mit einem Fahrgestell (50) mit Antrieb sowie einer mehrteiligen, ausfahrbaren, höhenverstellbaren Treppe (60) mit einer oberen Plattform (13) und mit einem Fahr- und Bedienstand (12).

Um eine solche Fluggasttreppe zu schaffen, welche sich ohne Einweisungshilfe durch dritte Personen in einfacher Weise schnell in die richtige Position an einem Flugzeugrumpf heranfahren läßt, wird erfindungsgemäß vorgeschlagen, daß der Fahr- und Bedienstand (12) im Bereich der oberen Plattform (13) angeordnet und mit dieser ausfahrbar ist.

Fig. 1

## FLUGGASTTREPPE

Die vorliegende Erfindung betrifft eine Fluggasttreppe mit einem Fahrgestell mit Antrieb sowie einer mehrteiligen, ausfahrbaren, höhenverstellbaren Treppe mit einer oberen Plattform und mit einem Fahr- und Bedienstand.

Derartige fahrbare und höhenverstellbare Fluggasttreppen werden auf vielen Flughäfen eingesetzt, wo die Fahrgäste auf dem Flughafenvorfeld in Flugzeuge ein- oder aussteigen müssen.

Die bisher bekannten Fluggasttreppen werden dabei auf ein herkömmliches Lkw-Fahrgestell montiert, wobei die Treppe im eingefahrenen Zustand teilweise in dem Bereich liegt, der ansonsten für eine Ladefläche vorgesehen ist, teilweise aber auch das Fahrerhaus des Lkw-Fahrgestells überragt, und so eine beträchtliche Bauhöhe erreicht.

Eine solche Fluggasttreppe auf Lkw-Fahrgestell wird im Bedarfsfall an ein Flugzeug herangefahren, woraufhin die mehrteilige Treppe noch weiter ausgefahren wird und wobei die Übergangsplattform von der Fluggasttreppe zum Flugzeugrumpf bis in eine Höhe von maximal 5,6 m ausgefahren werden muß. Dabei ragt der vordere Teil der Treppe mit der Plattform in der Regel weit über das Vorderende des Fahrgestells hinaus. Da außerdem handelsübliche Fahrgestelle Verwendung finden, deren Radstand nicht übermäßig groß ist, muß das Fahrzeug, um ein Umkippen sicher zu vermeiden, häufig vor dem vollständigen Ausfahren der Treppe zusätzliche Stützen im Bereich der Fahrgestellecken ausfahren. Da sich die Übergangsplattform oft um einige Meter vor und über dem Fahrerhaus des Lkw-Fahrgestells befindet, kann dieser nur unter Schwierigkeiten in die richtige Position an den Flugzeugrumpf heranrangieren und muß hierzu häufig mehrere Rangierversuche unternehmen oder ist auf die Einweisungshilfe einer weiteren Person angewiesen.

Derartige Andockverfahren sind aufwendig und zeitraubend, insbesondere dann, wenn vor dem vollständigen Ausfahren der Treppe das Fahrgestell abgestützt werden muß und sich anschließend herausstellt, daß die Treppe noch nicht die richtige Position erreicht hat, so daß die Treppe wieder eingefahren und die richtige Position erneut gesucht werden muß.

Demgegenüber liegt der vorliegenden Erfindung die Aufgabe zugrunde, eine Fluggasttreppe mit den eingangs genannten Merkmalen zu schaffen, welche sich ohne Einweisungshilfe durch dritte Personen in einfacher Weise schnell in die richtige Position an einen Flugzeugrumpf heranfahren läßt.

Diese Aufgabe wird dadurch gelöst, daß der Fahr- und Bedienstand der Fluggasttreppe im Bereich der oberen Plattform angeordnet und mit dieser zusammen ausfahrbar ist.

Die obere Plattform schließt mit dem Ende der oberen Stufe des am weitesten ausfahrbaren Treppenteiles ab und ist im Regelfall mit diesem Treppenteil fest verbunden. Wird nun der Fahr- und Bedienstand im Bereich dieser Plattform, z.B. seitlich an der Plattform, auf der Plattform oder unmittelbar darunter angeordnet, so wird dieser Fahr- und Bedienstand gemeinsam mit der Plattform und dem oberen Treppenende ausgefahren, so daß die Bedienperson bezüglich der Plattform, die an den Flugzeugrumpf heranzufahren ist, immer in derselben Position bleibt und so wesentlich bessere Sichtverhältnisse hat, als vom weit unterhalb und hinter der Plattform liegenden Fahrerhaus eines Lkw-Fahrgestells aus.

In der bevorzugten Ausführungsform der Erfindung ist der Fahr- und Bedienstand als im wesentlichen geschlossene Kabine ausgeführt.

Damit das Fahrgestell von dem Fahr- und Bedienstand aus lenk- und bedienbar ist und damit auch die Treppe von dieser Position her ausgefahren und gegebenenfalls verschwenkt werden kann, ist erfindungsgemäß vorgesehen, daß zwischen dem Fahr- und Bedienstand bzw. der Fahrerkabine einerseits und dem Fahrgestell bzw. Antriebs- und Ausfahrelementen andererseits hydraulische und/oder elektrische Steuerleitungen angeordnet sind.

Bevorzugt ist eine Ausführungsform der Erfindung, bei welcher der als Fahrerkabine ausgebildete Fahr- und Bedienstand auf der obersten Plattform auf der, in normaler Fahrtrichtung gesehen, linken Seite angeordnet ist. Der Fahrer hat so beim Heranfahren an einen Flugzeugrumpf immer die Tür des Rumpfes im Blickfeld, unter welcher das vordere Ende der Plattform an den Rumpf heranzufahren ist. Da außerdem an der Plattform, d.h. im Übergangsbereich von der Fluggasttreppe zum Flugzeug, auch Seitenwände und Dachelemente angeordnet sind, die so eine um die Flugzeugtür herum auf den Rumpf aufzusetzende Öffnung bilden, hat der Fahrer von der auf der Plattform angeordneten Fahrerkabine aus die beste Sicht auf alle mit dem Flugzeugrumpf in Berührung tretenden Teile.

Zweckmäßigerweise ist in Verlängerung des Vorderendes der Plattform mindestens eine in oder unter die Plattform einfedernde Leiste vorgesehen.

Diese einfedernde "Leiste" wird an den Flugzeugrumpf herangefahren und federt dabei unter dem Druck gegen den Flugzeugrumpf etwas ein. Die Leiste erstreckt sich vorzugsweise über das gesamte Vorderende der Plattform, wobei ihre Ausdehnung senkrecht hierzu von dem gewünschten Federweg abhängt und beispielsweise 300 bis 500 mm betragen kann. Die Vorderkante einer solchen Leiste kann gepolstert bzw. mit einem Gummiwulst versehen sein (Bumper). Um bei einer relativ breiten Plattform eine optimale Anpassung des Vorderendes der Plattform an den Flugzeugrumpf zu erreichen ist außerdem vorgesehen, daß die Federleiste in getrennt einfedernde Segmente unterteilt ist.

Sofern die Plattform auch hochstehende Seitenwände aufweist, sind auch deren Vorderenden vorzugsweise mit einfedernden Frontteilen versehen.

Dabei können die Frontteile auch mit dem jeweils unmittelbar anschließenden Federleistensegment verbunden oder unabhängig von diesen einfederbar sein.

Die einzelnen Treppenteile weisen gemäß der vorliegenden Erfindung eine Parallelführung in Form von an ihrer Unterseite angeordneten Führungsschienen und darin laufenden Führungsrollen auf. Die Anordnung der Führungsschienen an der Unterseite der einzelnen Treppenteile hat den Vorteil, daß die Breite der Treppenteile nicht von derartigen Führungen beeinträchtigt wird.

Vorzugsweise sind die Führungsschienen Gabelstaplerprofile. Derartige Gabelstaplerprofile sind sehr präzise gearbeitete U-oder Doppel-T-Profile, die so eine sehr saubere und gleichmäßige Führung der einzelnen Treppenteile ermöglichen.

Das Ausfahren der Treppe erfolgt vorzugsweise hydraulisch, so daß in der bevorzugten Ausführungsform der Erfindung zwischen Fahrgestell und oberem Treppenteil ein hydraulische Verschiebeeinrichtung angeordnet ist.

Dabei besteht die Treppe vorzugsweise aus einem unteren, mit dem Fahrgestell fest verbundenen Teil, einem relativ hierzu verschiebbaren Mittelteil und einem relativ zu den beiden vorgenannten Teilen verschiebbaren oberen Teil, mit dessen oberem Stufenende die Plattform fest verbunden ist.

Zweckmäßigerweise sind zwischen dem oberen Teil und dem Mittelteil Anschläge vorgesehen, durch welche das Mittelteil in Ausfahrrichtung mitnehmbar ist, sobald das obere Teil seine relativ zum mittleren Teil maximal vorgesehene Ausfahrposition erreicht hat. Dabei sind außerdem zwischen dem unteren Teil und dem Mittelteil sowie zwischen dem Mittelteil und dem oberen Teil Zwischenplattformen vorgesehen.

Um zwischen den einzelnen Treppenteilen erste oder letzte Stufen zu vermeiden, deren Höhe von dem Maß der übrigen Stufen abweicht ist außerdem vorgesehen, daß an mindestens einem Teil der Treppenteile im Abstand ganzer Stufen Verriegelungsanschläge vorgesehen sind, durch welche die beweglichen Treppenteile in Einfahrrichtung gegeneinander und gegen das untere Treppenteil in jeweils ganzen Vielfachen einer Stufenhöhe arretierbar sind.

Zum Schutz gegen Witterungseinflüsse ist außerdem vorgesehen, daß jedes Treppenteil eine im Querschnitt U-förmige Abdeckung aufweist, welche das jeweilige Treppenteil von oben umgreift und so gleichzeitig ein Dach und eine Seitenverkleidung bildet.

Dabei ist erfindungsgemäß vorgesehen, daß im eingefahrenen Zustand der Treppe die Abdeckung des jeweils höher ausfahrbaren Treppenteiles die Abdeckung des jeweils davor liegenden Treppenteiles im wesentlichen vollständig umgreift. Soweit diese Abdeckungen in den Seitenwänden oder auch im Dachteil Fenster aufweisen, erscheint es zweckmäßig, wenn diese Fensterteile im eingefahrenen Zustand der Treppe übereinander liegen, so daß sie Licht in den zwischen Stufen und Abdeckung gebildeten Innenraum hineinlassen.

Außerdem sollten die Abdeckungen im vollständig ausgefahrenen Zustand der Treppe am Übergang zwischen den einzelnen Treppenteilen mindestens teilweise überlappen.

Vorzugsweise haben die Treppenteile jeweils gleiche Stufenbreite. Dies wird unter anderem durch die Führung der Treppenteile an unter den Treppenteilen angebrachten Schienen und Führungsrollen erreicht. Auf diese Weise vermeidet man Engpässe und damit verbundene Stauungen im Treppenbereich.

Zweckmäßigerweise erstreckt sich die Abdeckung des oberen Treppenteils mindestens teilweise noch über die obere Plattform, welche mit dem oberen Treppenteil verbunden ist und ist darüberhinaus an ihrem vorderen Ende mit einem Faltenbalg versehen.

Damit ist der gesamte Treppenaufgang einschließlich des Übergangsbereiches zum Flugzeugrumpf überdacht, wobei der Faltenbalg eine Anpassung an unterschiedliche Krümmungen verschiedener Flugzeugrümpfe ermöglicht und im wesentlichen dicht mit dem Flugzeugrumpf abschließend an diesen anlegbar ist.

Besonders bevorzugt ist eine Ausführungsform der Erfindung, bei welcher Radstand und Spurweite des Fahrgestells so groß gewählt sind, daß die Treppenteile im eingefahrenen Zustand im wesentlichen vollständig innerhalb des durch die Radaufstandspunkte aufgespannten Rahmens liegen, wobei der Schwerpunkt der gesamten Fluggasttreppe auch im vollständig ausgefahrenen Zustand noch deutlich innerhalb dieses Rahmens liegt. Genauer gesagt liegen die Treppenteile im eingefahrenen Zustand und der Schwerpunkt in der vertikalen Projektion innerhalb dieses Rahmens.

Diese Ausführungsform bedeutet eine Abweichung von konventionell erhältlichen Fahrgestellen, deren Radstand und Spurweite üblicherweise kleiner bemessen ist, als daß diese Bedingung bei den zu verwendenden Treppenmaßen erfüllt werden kann. So beträgt gemäß einer bevorzugten Ausführungsform der Erfindung die Spurweite vorn etwa 2,1 m und hinten etwa 2,50 m, wobei der Radstand etwa 6,24 m beträgt.

Bei diesen Maßen sind die Räder sehr nah an den äußeren Ecken des Fahrgestells angeordnet und mann kann auf eine zusätzliche Abstützung verzichten, auch wenn die Treppe voll ausgefahren und belastet wird, da zusätzlich die Einfederung der Räder beim Andocken automatisch verriegelt wird.

Um Schwankungen der Rumpfhöhe des Flugzeugs aufgrund wechselnder Beladungszustände auszugleichen ist außerdem vorgesehen, daß die Treppe, d.h. alle Treppenteile gemeinsam, um eine horizontale und zur Ausfahrrichtung der Treppe senkrechte Achse verschwenkbar sind. Dabei wird eine Ausführungsform bevorzugt, bei welcher die Schwenkachse der Treppe mit der Hinterachse des Fahrgestells zusammenfällt. Dies wird beispielsweise in der bevorzugten Ausführungsform der Erfindung dadurch erreicht, daß das Fahrgestell ein Mittelgelenk aufweist, welches ein Verschwenken eines vorderen gegenüber einem hinteren Fahrgestellteil um eine horizontale, zur Längsrichtung des Fahrgestells senkrechte und durch das Mittelgelenk verlaufende Achse erlaubt. In der Seitenansicht kann also das Fahrgestell an diesem Mittelgelenk geknickt erscheinen. Dabei sind zweckmäßigerweise Anschläge im Bereich des Mittelgelenkes vorgesehen, die ein Verschwenken des hinteren Teils mit der Treppe nach unten begrenzen. Ein Verschwenken des hinteren Teils mit der Treppe nach unten bedeutet, da die Räder des Fahrzeuges auf dem Boden aufstehen, ein Absinken des Mittelgelenkes, wobei die Anschläge das Absenken dieses Mittelgelenkes auf einen tiefstmöglichen Punkt begrenzen.

Um die auftretenden Höhenschwankungen eines Flugzeugrumpfes auszugleichen und um einen stufenlosen Übergang von der Plattform in die Tür eines Flugzeuges sicherzustellen, hat es sich als ausreichend erwiesen, wenn der Verschwenkwinkel, ausgehend von einer Mittelposition der Treppe bzw. des Fahrgestells, mindestens ± 3° beträgt.

Gemäß einer weiteren Ausgestaltung der erfindungsgemäßen Fluggasttreppe ist die Breite der Plattform und des oberen Dachelementes mit dem Faltenbalg sowie der Abstand zwischen Plattform und Faltenbalg so gewählt, daß eine herkömmliche Flugzeugtür vollständig innerhalb der so gebildeten Öffnung problemlos geöffnet und geschlossen werden kann. Auf diese Weise vermeidet man die gefährliche Situation, die Flugzeugtür nur dann öffnen und schließen zu können, wenn die Fluggasttreppe bzw. deren obere Plattform sich mindestens in einem Abstand vom Flugzeugrumpf befindet, der größer als die Türbreite ist.

Hierzu hat es sich als ausreichend erwiesen, wenn das licht Maß der von der Plattform, dem Faltenbalg und/oder den gegebenenfalls vorhandenen Seitenwänden definierten vorderen Öffnung des Treppenganges in der Breite mindestens 2,6 m und in der Höhe mindestens 2,3 m beträgt.

Ebenso wie für das Ausfahren der Treppe ist auch für das Verschwenken der beiden Fahrgestellteile gegeneinander ein Hydraulikelement vorgesehen, welches im Abstand von der Mittelgelenkachse und mit einer Wirkrichtung senkrecht zu dieser Achse an je einem Teil des vorderen und des hinteren Fahrgestellteiles ansetzt.

Weitere Vorteile, Merkmale und Anwendungsmöglichkeiten der vorliegenden Erfindung werden deutlich bei der folgenden Beschreibung einer bevorzugten Ausführungsform anhand der dazugehörigen Figuren. Es zeigen:

Figur 1 die perspektivische Ansicht einer ausgefahrenen Fluggasttreppe,

Figure 2 die Fluggasttreppe nach Figur 1, jedoch in eingefahrenem Zustand und ohne Abdeckungen, ebenfalls in perspektivischer Ansicht,

Figur 3 eine schematische Darstellung wesentlicher Elemente des Fahrgestells und der Treppe in ausgefahrenem Zustand in einer Seitenansicht,

Figur 4 eine Figur 3 entsprechende Darstellung mit der Treppe in eingefahrenem Zustand und

Figur 5 einen Schnitt entlang der Linien V-V in Figur 4.

Die in den Figuren dargestellte Fluggasttreppe besteht aus einem Fahrgestell 50 mit eigenem Antrieb und einer Treppe 60, die aus drei Treppenteilen 8, 9, 10 besteht, wobei die Treppenteile 9 und 10 gegenüber dem fest mit dem hinteren Fahrgestellteil 2 verbundenen Treppenteil 8 beweglich sind und wobei an dem oberen Treppenteil 10 im Bereich dessen oberster Stufe eine Plattform 13 angeordnet und fest mit dem oberen Treppenteil 10 verbunden ist.

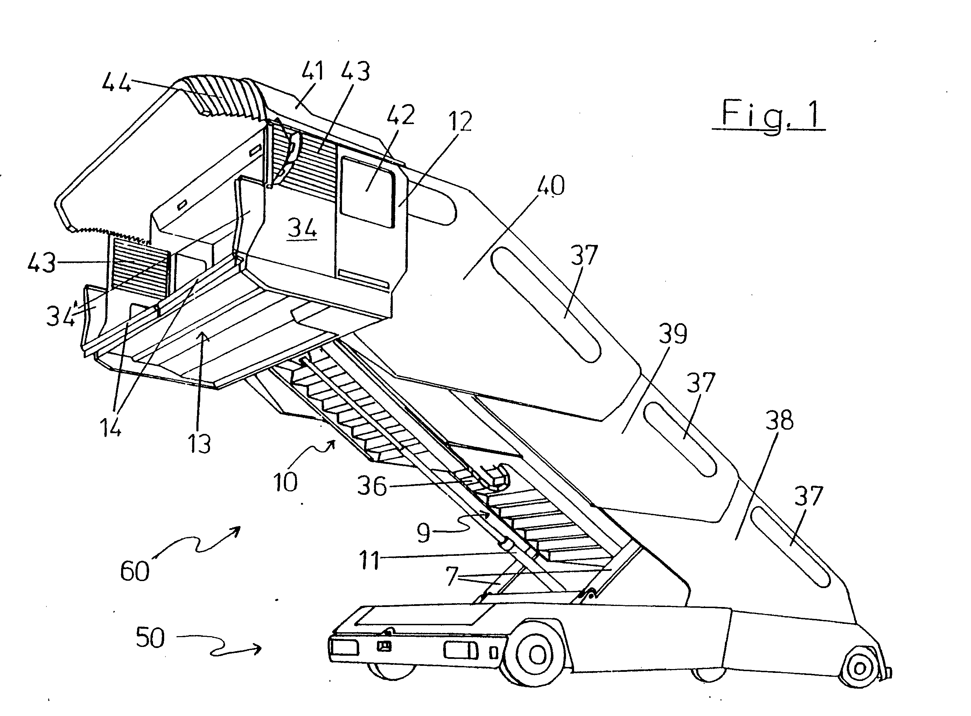

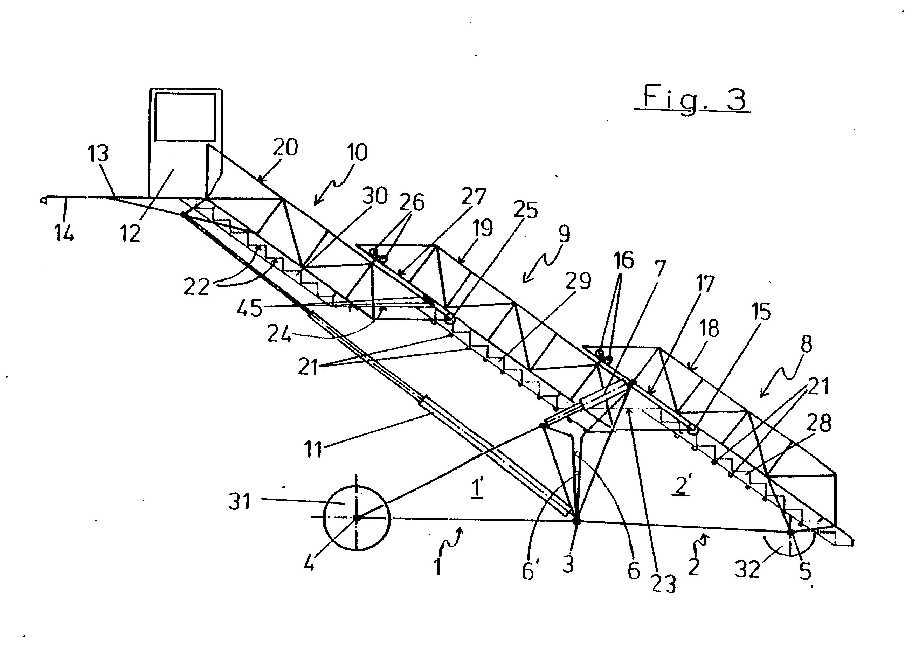

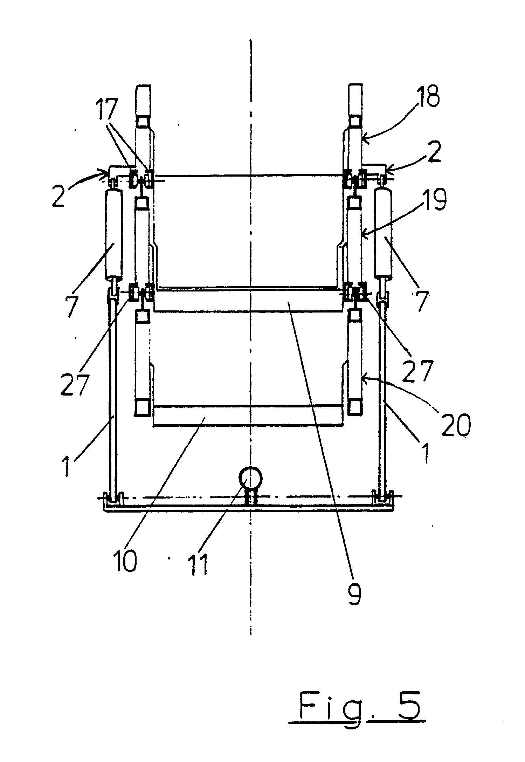

Die einzelnen Treppenteile sind über Gabelstaplerprofile 17, 27, welche im Schnitt in Figur 5 dargestellt sind, sowie über darin laufende Führungsrollen 15, 16, 25, 26, die schematisch auch in Figur 3 angedeutet sind, parallel zueinander verschieblich geführt. Die einzelnen Treppenteile bestehen im wesentlichen aus stählernen Fachwerkelementen 18, 19, 20, den eigentlichen Stufenteilen 28, 29, 30 mit Stufen 22, den darunter angeordneten Führungsschienen 17, 27 und den erwähnten Führungsrollen 15, 16, 25, 26, wobei jedes der Treppenteile 8, 9, 10 noch je eine Abdeckung aufweisen kann, die in Figur 1 mit 38, 39 und 40 bezeichnet sind.

An der Unterseite der Treppenteile 8 und 9 sind außerdem im Abstand ganzer Stufen Verriegelungsanschläge 21 vorgesehen, an welchen das jeweils darüberliegende Treppenteil 9 bzw. 10 jeweils beim Absenken in Einfahrrichtung einrasten kann. Mit dem Hydraulikelement 11, welches am Fahrgestell vorzugsweise im Bereich des Mittelgelenkes 3 und mit seinem anderen Ende am oberen Treppenelement 10 ansetzt wird also zunächst das obere Treppenteil 10 parallel zur Richtung der Treppensteigung ausgefahren und nimmt gegebenenfalls über Anschläge 45 das Mittelteil 9 in Ausfahrrichtung mit, sobald es bezüglich diesem seine maximale Ausfahrposition erreicht hat. Sobald die obere Plattform 13 die gewünschte Höhe im Bereich des unteren Randes der Türöffnung des Flugzeugrumpfes erreicht hat, wird eine nicht dargestellte Verriegelung an dem oberen Treppenteil 10 und/oder dem Mittelteil 9 aktiviert, welche beim nun folgenden Absenken bzw. Einfahren der Treppe in den nächstfolgenden Verriegelungsanschlag 21 eingreift, so daß es zwischen den Plattformen 23, 24, die den Übergang zwischen verschiedenen Treppenteilen bilden und dem vorhergehenden oder folgenden Treppenteil keine Stufe gibt, die eine von den übrigen Stufen 22 abweichende Höhe hätte. Die durch das Einstellen dieser festen Stufenbeziehung etwa von der Unterkante der Türöffnung am Flugzeugrumpf abweichende Höhe der Plattform 13 wird nunmehr durch leichtes Verschwenken der gesamten Treppe um die Hinterachse 5 des Fahrgestells ausgeglichen. Hierzu ist ein Hydraulikelement 7 vorgesehen, welches an einem Teil 2' des zweiten Fahrgestellteiles 2 einerseits und an einem Teil 1' des vorderen Fahrgestellteils 1 andererseits ansetzt und im Abstand zur Achse des Mittelgelenkes 3 senkrecht zu dieser Achse wirkt.

Da die Räder 32, 31 des Fahrgestells 50 auf dem Boden aufstehen, werden bei Betätigung des Hydraulikelementes 7 die beiden Fahrgestellteile 1, 2 um die Vorderachse 4 bzw. um die Hinterachse 5 des Fahrgestells verschwenkt, wobei das Mittelgelenk 3 je nach Richtung dieser Verschwenkung entweder angehoben oder abgesenkt wird. Mit dem hinteren Fahrgestellteil 2 verschwenkt auch die in ihrer Position relativ zum hinteren Fahrgestellteil 2 fixierte Treppe 60 als Ganzes. Anschläge 6, 6' begrenzen dabei die Verschwenkung der Treppe 60 nach unten. Als weitere Besonderheit hervorzuheben ist die Anordnung der Fahrerkabine 12 auf der oberen Plattform 13. Die Kabine 12 ist beispielsweise über hydraulische und elektrische Zuleitungen, die beispielsweise in einer in Figur 1 erkennbaren Hohlgliederkette 36 geführt sein können, mit dem Fahrgestell 50 bzw. mit sämtlichen Antriebs-bzw. von der Führerkabine aus zusteuernden Betriebselementen der Fluggasttreppe verbunden. Der Fahrer kann also von dieser Kabine 12 aus sowohl die Fluggasttreppe als Ganzes fahren und lenken und er kann von hier aus auch die Fluggasttreppe ein- und aus fahren und verschwenken. Dabei können zweckmäßigerweise Sicherungseinrichtungen vorgesehen werden, die ein Fahren der Fluggasttreppe im ausgefahrenen Zustand auf eine Geschwindigkeit von beispielsweise unter 6 km/h begrenzen.

Im Gebrauch wird also eine solche Fluggasttreppe im eingefahrenen Zustand auf einem Flugplatzvorfeld an ein Flugzeug herangefahren, wobei seine Geschwindigkeit entsprechend üblichen Bestimmungen beispielsweise auf 30 km/h begrenzt sein kann. Sobald die Fluggasttreppe in die Nähe des Flugzeugrumpfes kommt, kann dann der Fahrer die Geschwindigkeit entsprechend herabsetzen, die Fluggasttreppe ausfahren und dabei langsam an den Flugzeugrumpf heranmanövrieren. Dabei hat der Fahrer von der Kabine 12 aus eine sehr gute Sicht auf sämtliche Teile im Bereich der oberen Plattform 13, welche mit dem Flugzeugrumpf in Berührung treten können und sollen. Dies sind insbesondere die geteilte Federleiste 14 an der Vorderkante der Plattform 13, die Frontteile oder Bumper 34' an den Seitenwänden 34 und der Faltenbalg 44 am Dachelement 41 über der Plattform 13. Außerdem sind noch durch Jalousien 43 verschließbare Öffnungen in den Seitenwänden 34 vorgesehen, wobei diese Jalousieteile auch an dem Dachelement 41 angeordnet sein können. Aus der sehr günstigen Position der Kabine 12 heraus kann der Fahrer problemlos und ohne Einweisungshilfe weiterer Personen exakt an den Flugzeugrumpf heranmanövrieren.

Der Fahrer hat nicht nur Sicht auf die vom Faltenbalg 44 der Plattform 13 und den Seitenwänden 34 gebildete vordere Öffnung der Fluggasttreppe, sondern durch Fenster 42 auch zur Seite hin. Auch auf der gegenüberliegenden Seite sind weitere Fenster angeordnet, insbesondere können dann zum Fahren auf dem Flug platzvorfeld die Jalousien 43 geöffnet sein. Die Fenster 37 in den Abdeckungen 38, 39 und 40 sind so angeordnet, daß sie genau übereinander zu liegen kommen, wenn die Fluggasttreppe vollständig eingefahren ist.

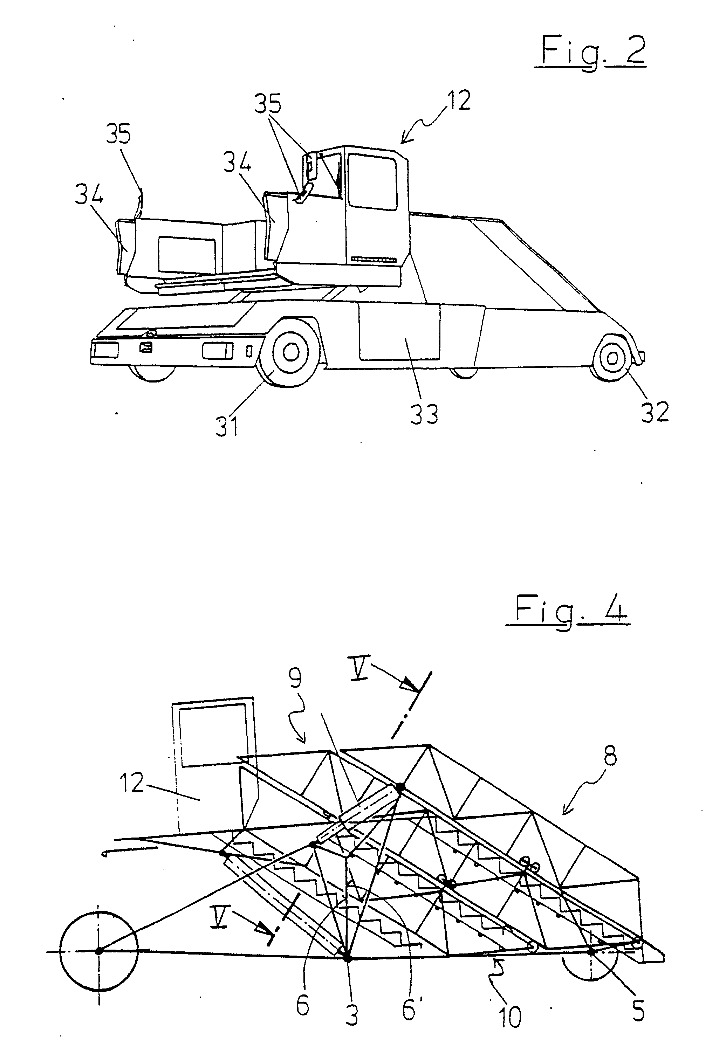

Wie man aus den Figuren 2 und 4 erkennen kann, liegt die Fluggasttreppe im eingefahrenen Zustand im wesentlichen vollständig innerhalb des von den Aufstandpunkten der Räder 31, 32 aufgespannten Rahmens bzw. innerhalb einer vertikalen Projektion dieses Rahmens. Lediglich im Heckbereich der Fluggasttreppe ist ein kleinerer Überstand des unteren Treppenteiles 8 vorgesehen, um das bequeme Besteigen der Fluggasttreppe über die Hinterachse 5 des Fahrgestells 50 hinweg zu ermöglichen. Auch im vollständig ausgefahrenen Zustand, wie er in Figur 3 dargestellt ist, liegt ein Großteil der Treppe noch immer über dem von den Radaufstandspunkten gebildeten Rahmen, so daß auch der Schwerpunkt der gesamten Treppe einschließlich des Fahrgestells selbst bei einer Belastung durch Fluggäste ausschließlich auf der Plattform 13 noch immer deutlich innerhalb dieses Rahmens liegt.

Die Fahrgestellteile 1 und 2 weisen hochgezogene Seitenwandteile 1' bzw. 2' auf, die auch als ein Stahlgitter bzw. ein Stahlfachwerk ausgeführt sein können. Die Dreieckform ergibt zwei sehr verwindungssteife Teile 1 und 2 des Fahrgestells 50, welche gegeneinander über das Mittelgelenk 3 verschwenkbar sind. Entsprechend den auf beiden Seiten paarweise vorhandenen Seitenwandteilen 1', 2' sind, wie in Figur 1 zu erkennen, auch zwei Hydraulikelemente 7 vorgesehen, welche hydraulisch miteinander gekoppelt sind und jeweils in möglichst großem Abstand zur Achse des Mittelgelenkes 3 an den Teilen 1' und 2' angreifen.

Wie man aus Figur 1 weiterhin sieht, werden diese hochgezogenen Seitenteile 1', 2' von der Abdeckung 37 des unteren Treppenteils mit umfaßt und abgedeckt. Dabei überdecken im eingefahrenen Zustand auch die Abdeckungen 39 und 40 die untere Abdeckung 38. Wenn die Fluggasttreppe im eingefahrenen Zustand über ein Flughafenvorfeld gefahren wird, werden die Hydraulikelemente 7 entlastet, so daß die einander zugewandten Kanten 6', 6 der hochgezogenen Seitenteile 1', 2' aneinander anschlagen, wobei das Mittelgelenk 3 in seine tiefstmögliche Stellung absinkt. Gegebenenfalls kann das Fahrgestell auch in dieser Position verriegelt werden. Man erhält damit auch für schnellere Fahrten ein ausreichend stabiles Fahrgestell 50.

In Figur 2 ist mit 33 ein Batterietrog gekennzeichnet, der für die Aufnahme von Batterien für den elektrischen Antrieb der Fluggasttreppe vorgesehen ist.Dabei verwendet man zweckmäßigerweise zwei 80 Volt-Batterien mit einer Kapazität von 320 Ah sowie für die sonstige Stromversorgung mehrere, gegebenenfalls hintereinandergeschaltete 12 Volt-Batterien.

Durch das flache Fahrgestell ergibt sich insgesamt auch eine relativ geringe Gesamthöhe der eingefahrenen Fluggasttreppe von nur wenig über 4 m oder darunter.

**Ansprüche**

1. Fluggasttreppe mit einem Fahrgestell (50) mit Antrieb sowie einer mehrteiligen, ausfahrbaren, höhenverstellbaren Treppe (60) mit einer oberen Plattform (13) und mit einem Fahr- und Bedienstand (12), dadurch gekennzeichnet, daß der Fahr- und Bedienstand (12) im Bereich der oberen Plattform (13) angeordnet und mit dieser ausfahrbar ist.

2. Fluggasttreppe nach Anspruch 1, dadurch gekennzeichnet, daß der Fahr- und Bedienstand eine im wesentlichen geschlossene Kabine (12) ist.

3. Fluggasttreppe nach einem der Ansprüche 1 oder 2, dadurch gekennzeichnet, daß zwischen Fahr- und Bedienstand (12) einerseits und dem Fahrgestell (50) bzw. Antriebs- und Betriebselementen andererseits hydraulische und/oder elektrische Steuerleitungen vorgesehen sind.

4. Fluggasttreppe nach Anspruch 2 oder 3, dadurch gekennzeichnet, daß der als Fahrerkabine (12) ausgebildete Fahr- und Bedienstand auf der obersten Plattform (13) der Treppe (60) auf der, in normaler Fahrtrichtung gesehen, rechten oder linken Seite angeordnet ist.

5. Fluggasttreppe nach einem der Ansprüche 1 bis 4, dadurch gekennzeichnet, daß in Verlängerung des Vorderendes der Plattform (13) mindestens eine in oder unter die Plattform (13) einfedernde Leiste (14) vorgesehen ist.

6. Fluggasttreppe nach Anspruch 5, dadurch gekennzeichnet, daß die einfedernde Leiste (14) in getrennt einfedernde Segmente unterteilt ist.

7. Fluggasttreppe nach einem der Ansprüche 1 bis 6, dadurch gekennzeichnet, daß an den Seitenrändern der Plattform (13) sich senkrecht zu dieser erstreckende Seitenwände (34) vorgesehen sind, welche an ihren vorderen Enden einfedernde Frontteile (34') aufweisen.

8. Fluggasttreppe nach Anspruch 5 oder 6 und nach Anspruch 7, dadurch gekennzeichnet, daß die Frontteile (34') unabhängig von dem anschließenden Federleistensegment (14) der Plattform (13) einfederbar sind.

9. Fluggasttreppe nach einem der Ansprüche 1 bis 8, dadurch gekennzeichnet, daß die Treppenteile (8, 9, 10) eine Parallelführung in Form von an der Unterseite der Treppenteile angeordneten Führungsschienen (17, 27) und darin laufenden Führungsrollen (15, 16, 25, 26) aufweisen.

10. Fluggasttreppe nach Anspruch 9, dadurch gekennzeichnet, daß die Führungsschienen Gabelstaplerprofile sind.

11. Fluggasttreppe nach einem der Ansprüche 1 bis 10, dadurch gekennzeichnet, daß die Treppe (60) aus einem unteren, mit dem Fahrgestell (50) fest verbundenen Teil (8), einem relativ hierzu verschiebbaren Mittelteil (9) und einem relativ zu beiden vorgenannten Teilen verschiebbaren oberen Teil (10) besteht, an dessen oberem Stufenende die Plattform (13) fest angeordnet ist.

12. Fluggasttreppe nach einem der Ansprüche 9 bis 11, dadurch gekennzeichnet, daß zwischen Fahrgestell (50) und oberem Treppenteil (10) eine hydraulische Verschiebeeinrichtung (11) angeordnet ist.

13. Vorrichtung nach einem der Ansprüche 9 bis 12, dadurch gekennzeichnet, daß zwischen dem oberen Treppenteil (10) und dem mittleren Treppenteil (9) Anschläge vorgesehen sind, durch welche das mittlere Treppenteil (9) in Ausfahrrichtung mitnehmbar ist, sobald das obere Treppenteil (10) seine relativ zum Mittelteil (9) maximal vorgesehene Ausfahrposition erreicht hat.

14. Fluggasttreppe nach einem der Ansprüche 9 bis 13, dadurch gekennzeichnet, daß zwischen dem unteren Treppenteil (8) und dem Mittelteil (9) sowie zwischen dem Mittelteil (9) und dem oberen Treppenteil (10) Zwischenplattformen (23, 24) vorgesehen sind.

15. Fluggasttreppe nach einem der Ansprüche 9 bis 14, dadurch gekennzeichnet, daß an mindestens einem Teil der Treppenteile (8, 9, 10) im Abstand ganzer Stufen (22) Verriegelungsanschläge (21) vorgesehen sind, durch welche die beweglichen Treppenteile (9, 10) in Einfahrrichtung gegeneinander und gegen das untere Treppenteil (8) in Ausfahrstellungen arretierbar sind, die jeweils einem ganzen Vielfachen einer Stufenhöhe entsprechen.

16. Fluggasttreppe nach einem der Ansprüche 9 bis 15, dadurch gekennzeichnet, daß jedes Treppenteil (8, 9, 10) eine im Querschnitt U-förmige oder halbrunde Abdeckung (38, 39, 40) aufweist, welche das jeweilige Treppenteil von oben umgreift und so gleichzeitig ein Dach und eine Seitenverkleidung bildet.

17. Fluggasttreppe nach Anspruch 16, dadurch gekennzeichnet, daß im eingefahrenen Zustand die Abdeckung (39, 40) des jeweils weiter ausfahrbaren Treppenteiles (9, 10) die Abdeckung (38, 39) des jeweils davorliegenden Treppenteiles (8, 9) im wesentlichen vollständig umgreift.

18. Fluggasttreppe nach Anspruch 16 oder 17, dadurch gekennzeichnet, daß im vollständig ausgefahrenen Zustand der Treppe (60) die Abdeckungen am Übergang zwischen den Treppenteilen (8, 9, 10) mindestens teilweise überlappen.

19. Fluggasttreppe nach einem der Ansprüche 16 bis 18, dadurch gekennzeichnet, daß die Abdeckung (40) des oberen Treppenteiles (10) mindestens teilweise bis über die obere Plattform (13) verlängert ist und an seinem Vorderende einen Faltenbalg (44) aufweist.

20. Fluggasttreppe nach einem der Ansprüche 1 bis 19, dadurch gekennzeichnet, daß an der oberen Plattform (13) befestigte und/oder sich von einer Abdeckung abwärts erstreckende Seitenwände (34) im Bereich der Plattform (13) Fenster (42) und/oder gegebenenfalls verschließbare Öffnungen (43) aufweisen.

21. Fluggasttreppe nach einem der Ansprüche 1 bis 20, dadurch gekennzeichnet, daß die Treppenteile (8, 9, 10) jeweils gleiche Stufenbreite haben.

22. Fluggasttreppe nach einem der Ansprüche 1 bis 21, dadurch gekennzeichnet, daß Radstand und Spurweite des Fahrgestelles so groß gewählt sind, daß die Treppenteile (8, 9, 10) im eingefahrenen Zustand im wesentlichen vollständig innerhalb des durch die Radaufstandspunkte aufgespannten Rahmens liegen, wobei der Schwerpunkt der gesamten Fluggasttreppe im vollständig ausgefahrenen Zustand ebenfalls deutlich innerhalb dieses Rahmens liegt.

23. Fluggasttreppe nach einem der Ansprüche 1 bis 22, dadurch gekennzeichnet, daß alle Treppenteile gemeinsam um eine horizontale und zur Ausfahrrichtung senkrechte Achse verschwenkbar sind.

24. Fluggasttreppe nach Anspruch 23, dadurch gekennzeichnet, daß die Schwenkachse die Hinterachse (5) des Fahrgestells (50) ist.

25. Fluggasttreppe nach Anspruch 24, dadurch gekennzeichnet, daß das Fahrgestell ein Mittelgelenk (3) aufweist, welches ein Verschwenken des vorderen (1) gegenüber dem hinteren Fahrgestellteil (2) um eine horizontale, zur Längsrichtung des Fahrgestells senkrechte und durch das Mittelgelenk (3) verlaufende Achse erlaubt.

26. Fluggasttreppe nach Anspruch 25, dadurch gekennzeichnet, daß Anschläge (6, 6') im Bereich des Mittelgelenks (3) die Verschwenkung des hinteren Fahrgestellteiles (2) mit dem daran befestigten unteren Treppenteil (8) nach unten begrenzen.

27. Fluggasttreppe nach einem der Ansprüche 23 bis 26, dadurch gekennzeichnet, daß der Verschwenkwinkel, ausgehend von einer Mittelposition, mindestens $\pm 3°$ beträgt.

28. Fluggasttreppe nach einem der Ansprüche 23 bis 27, dadurch gekennzeichnet, daß ein im Abstand von der Mittelgelenkachse und mit einer Wirkrichtung senkrecht zu dieser Achse an je einem Teil des vorderen (1) und des hinteren Fahrgestellteils (2) ansetzendes Hydraulikelement (7) zur Einstellung des Verschwenkwinkels vorgesehen ist.

29. Fluggasttreppe nach einem der Ansprüche 1 bis 27, dadurch gekennzeichnet, daß die Breite der Plattform (13) und der oberen Abdeckung (41) der Plattform (13) sowie der Abstand zwischen der Plattform (13) und dem Faltenbalg (44) am Vorderende des oberen Dachelementes (41) so gewählt ist, daß eine herkömmliche Flugzeugtür vollständig innerhalb der so gebildeten Öffnung schließ- und öffenbar ist.

30. Fluggasttreppe nach Anspruch 28, dadurch gekennzeichnet, daß das lichte Maß der von Plattform (13), Faltenbalg (44) und/oder Seitenwänden (34) definierten vorderen Öffnung des oberen Treppenganges in der Breite mindestens 2,6 m und in der Höhe mindestens 2,30 m beträgt.

Fig. 1

Fig. 2

Fig. 4

Fig. 3

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | EP-A-0 256 976 (GEBRÜDER FRECH AG) <br> * das ganze Dokument * | 1-5,7,9, 12,14,20, 21,29,11, 13,16-19 | B 64 F 1/315 |
| Y | FR-A-2 064 427 (WESTERN GEAR CO.) <br> * Seite 2, Zeilen 13 - 23 * * Seite 8, Zeile 38 - Seite 9, Zeile 19; Figuren * | 1-5,7,20, 21,29 | |
| Y | US-A-3 664 456 (SMITH, SR. ET AL.) <br> * das ganze Dokument * | 1,9,12,14 | |
| A | US-A-4 640 528 (BOYLES ET AL.) <br> * Figuren * | 23-25 | |
| A | PATENT ABSTRACTS OF JAPAN vol. 8, no. 54 (M-282)(1491) 10 März 1984, <br> & JP-A-58 206469 (KANTOU JIDOUSHIYA KOGYO KK) 1 Dezember 1983, <br> * das ganze Dokument * | 23-25 | |
| A | DE-B-1 208 197 (SPURLING MOTOR BODIES LTD.) <br> * Spalte 4, Zeilen 17 - 31; Ansprüche 1, 5, 6; Figuren * | 11 | |
| A | DE-A-2 909 052 (TREPEL AG) | | |
| A | DE-A-2 046 238 (THE BUDD CO.) | | |

RECHERCHIERTE SACHGEBIETE (Int. Cl.5)

B 64 F
E 06 C
B 63 B
E 04 F
B 62
D
B 60 R

Der vorliegende Recherchenbericht wurde für alle Patentansprüche erstellt

| Recherchenort | Abschlußdatum der Recherche | Prüfer |
|---|---|---|
| Den Haag | 21 Februar 91 | ESTRELA Y CALPE J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument